# EUROPEAN PATENT SPECIFICATION

(11) **EP 2 088 023 B1**
(45) Date of publication and mention of the grant of the patent: **22.06.2011**
(21) Application number: 08002170.2
(22) Date of filing: 06.02.2008
(51) Int. Cl.: B60K 17/10, B60K 17/16, F16H 47/02, F16H 57/02

(54) **Transaxle and working vehicle equipped with transaxle**
Achsantriebsanordnung und Fahrzeug mit einer Achsantriebsanordnung
Agencement de transmission finale et véhicule avec un tel agencement

(43) Date of publication of application: 12.08.2009
(73) Proprietor: KANZAKI KOKYUKOKI MFG. CO., LTD., Amagasaki-shi, Hyogo-ken (JP)
(72) Inventor: Hirose, Shinichi, Amagasaki-shi Hyogo (JP)
(74) Representative: Jostarndt, Hans-Dieter

(56) References cited:
- EP-A- 1 255 062
- EP-A- 1 442 912
- JP-A- 2001 277 898
- JP-A- 2004 270 725
- JP-A- 2007 078 061
- JP-A- 2007 153 037
- US-A- 4 870 820
- US-A1- 2006 058 148
- US-B1- 6 732 828

## Description

### BACKGROUND OF THE INVENTION

### Field of the Invention

The present invention relates to a transaxle integrally including a pair of output shafts and a differential unit which differentially connects both of the output shafts, the transaxle being provided with a motor, such as an electric motor or a hydraulic motor, which drives the differential unit, and the invention relates to a working vehicle equipped with the transaxle,

### Related Art

As disclosed in US Patent No 6,732,828, there is a conventional articulated vehicle including front and rear vehicle frames articulatedly connected to each other. This articulated vehicle is equipped with a pair of transaxles, each of which includes a single casing. The single casing incorporates a pair of output shafts, a differential unit that differentially connects both of the output shafts to each other, and a motor that drives the differential units. Each of the transaxles is provided on each of the vehicle frames. Each of the casings includes two upper and lower casing halves joined to each other,

Both of the transaxles are economized by standardizing the casings, the pairs of output shafts, the differential units and the motors. However, with regard to some adaptable vehicles, each of the vehicles has hydraulic motors serving as the motors, which consist of a variable displacement hydraulic motor of one transaxle, and a fixed displacement hydraulic motor of the other transaxle, so as to ensure a required turning performance of the vehicle.

However, since the casing incorporates all of the pair of output shafts, the differential unit and the motor, the casing is complicated in shape so that the upper and lower casing halves cannot be formed in a common shape. As a result, the transaxle is still expensive.

### SUMMARY OF THE INVENTION

A first object of the present invention is to provide a lower-cost transaxle having a simple casing structure.

To achieve that object, according to the present invention, a transaxle comprises a pair of output shafts, a differential unit and a casing. The pair of output shafts are connected to a pair of wheels, respectively. The differential unit differentially connects both of the output shafts to each other. The casing incorporates the differential unit and both of the output shafts. The casing is configured by joining a pair of substantially identical right and left casing halves in a state where one casing half is disposed to correspond to the other casing half which is inverted laterally and vertically. Each of the joined casing halves journals one of the output shafts. Each of the right and left casing halves is formed on an outside thereof with an attachment portion adapted to have a motor for driving the differential unit attached thereon.

Accordingly, the substantially identical casing halves can be used as either the right or left casing half. Also, the casing does not incorporate the motor, so that the casing halves are compact and the shapes of them are simple. Consequently, a low-cost transaxle can be provided. An inexpensive hydraulic motor on the market may serve as the motor externally attached on the selected right or left casing part.

Preferably, in the transaxle, the casing incorporates a gear connecting the differential gear unit with a motor shaft of the motor attached to the attachment portion of the casing. A line connects a rotary axis of the motor shaft to rotary axes of the output shafts, and the gear is offset on one side from the line. A pair of bosses adapted to journal the gear are formed on each of the casing halves so as to be offset on opposite sides from the line.

Due to the offset arrangement of the bosses adapted to journal the gear, the gear supported by either of the bosses becomes offset from the line connecting the rotary center of the motor shaft to the rotary axes of the output shaft. Consequently, the line can be shortened, that is, a distance between the motor shaft and the output shafts can be shortened, so that the transaxle can be miniaturized in the direction of the line, i.e., in the direction perpendicular to the motor shaft and the output shafts. Further, due to the pair of bosses formed on each of the casing halves, the gear can be offset from the line between the motor shaft and the output shafts regardless of whether the casing half is used as either the right or left casing half. Thus, the casing halves can be standardized, thereby ensuring the reduction in cost.

Preferably, a plurality of bearings are disposed in each of portions of the casing halves, the portions supporting the respective output shafts.

Accordingly, a force supporting the output shafts can be increased while the portions of the casing halves supporting the respective output shafts can be shortened, whereby the transaxle can be miniaturized.

Preferably, in the transaxle, the differential unit is provided with a differential lock mechanism.

Accordingly, when the differential lock mechanism is operated, both of the output shafts are differentially locked to each other, so that forces controlling drive of the respective output shafts are equalized so as to prevent the unstable state of the vehicle caused by a difference of the forces.

Preferably, the transaxle further comprises a mechanical clutch interposed between the motor and the differential unit.

Accordingly, while the vehicle is towed, by disengaging the clutch, rotary forces of the wheels do not influence the motor. Therefore, if a hydraulic motor is used as the motor, the hydraulic motor is prevented from being regurgitantly driven by the wheels so as to act as a pump. Thus, the vehicle can be towed without resistance.

Preferably, the transaxle further comprises a brake mechanism disposed in the casing so as to brake the motor shaft of the motor. The brake mechanism includes a first friction member fixed on an internal wall of one of the casing halves, a second friction member optionally operative to slide in an axial direction of the motor shaft, and a brake disc disposed between the first and second friction member and coaxially engaged onto the motor shaft of the motor.

Consequently, the internal wall of the one casing half serves as a fixture portion for the first friction member. The brake mechanism, which is configured to apply a brake on the motor shaft by pressing the brake disc between the first and second friction members due to the slide of the second friction member, can be entirely disposed in the one casing half. Thus, the brake mechanism is still disposed in this casing half without being disassembled even when the casing halves are separated from each other, thereby being improved in assembility and maintenancability. When the brake mechanism is provided in the casing half having the motor attached thereon, the brake mechanism is disposed near the motor. As a result, a portion of the motor shaft to be braked is shortened so as to reduce load against braking. Thus, the brake mechanism can be miniaturized. Further, due to the location of the brake mechanism in one casing half, a space is ensured in the other casing half so as to be adapted to accommodate other mechanisms, such as the mechanical clutch.

Further preferably, the one casing half, on which the first friction member is fixed, supports a brake-operating shaft for sliding the second friction members.

Accordingly, while the casing halves support the respective output shafts, the brake-operating shaft oriented in the direction perpendicular to the output shafts is not extended between the casing halves, and instead, it can be supported by only the one casing half. Consequently, the brake mechanism, including the brake-operating shaft for sliding the second friction member, is incorporated in the one casing half, thereby being further surely improved in assembility and maintenancability, in reduction of load against its brake-application, and in ensuring the space in the other casing half.

Preferably, the transaxle includes a hydraulic motor as the motor.

Accordingly, it requires no labor for maintenance of an electric motor, e.g., battery charge or exchange of batteries.

A second object of the present invention is to provide a lower-cost working vehicle comprising the transaxle.

To achieve the secondary object, the vehicle comprises a pair of the above-mentioned transaxles.

Accordingly, the pair of output shafts of one transaxle are connected to a pair of left and right front wheels, and the pair of output shafts of the other transaxle are connected to a pair of left and right rear wheels, thereby providing a lower-cost hydraulic four-wheel-drive vehicle.

Preferably, according to the working vehicle, each of the transaxles is eccentrically disposed toward one of right and left sides of a vehicle body. The output shaft close to the one of right and left sides of the vehicle body has a wheel directly attached thereto, and the output shaft distant from the one of right and left sides of the vehicle body has a wheel attached thereto through an extension drive shaft.

Accordingly, a space for accommodating other implements is ensured on the right or left side of the transaxle to which the extension drive shaft is attached.

These, other and further objects, features and advantages of the invention will appear more fully from the following description taken in connection with the accompanying drawings.

### BRIEF DESCRIPTION OF THE DRAWINGS

Fig. 1 is a side view of an articulated riding lawnmower 100 as an embodiment of a four-wheel drive vehicle comprising front and rear transaxles 10 and 20 on which respective motor units 22 and 21 are externally attached according to the present invention.

Fig. 2 is a plane view of the riding lawnmower 100 illustrating a positional relationship of the front and rear transaxles 10 and 20 on which the respective motor units 22 and 21 are externally attached.

Fig. 3 is a diagram of a hydraulic circuit of the riding lawnmower 100 for driving the front and rear transaxles 10 and 20 on which the respective motor units 22 and 21 are externally attached.

Fig. 4 is a plane view of the rear transaxle 20 on which the motor unit 21 is externally attached.

Fig. 5 is a rear view of the rear transaxle 20 on which the motor unit 21 is externally attached.

Fig. 6 is a cross sectional plane view of the rear transaxle 20 on which the motor unit 21 is externally attached.

Fig. 7 is a cross sectional view of Fig.6 along the line A-A.

Fig. 8 is a right side view of the rear transaxle 20 on which the motor unit 21 are externally attached, including a cross sectional view of a fluid passage plate 91.

Fig. 9 is a right side view of the rear transaxle 20 from which the motor unit 21 is removed (however, including a sectional view of a motor shaft 65 and a motor unit attachment bolt 190).

Fig. 10 is a fragmentary cross sectional plan view of the rear transaxle 20 and the motor unit 21 that are separated from each other according to an embodiment employing a divisible motor shaft.

Fig. 11 is an elevational view in section of the rear transaxle 20, illustrating another embodiment of a supporting structure of a differential gear unit and output shafts.

Fig. 12 is a cross sectional side view illustrating another embodiment of the rear transaxle 20 on which the motor unit 21 is externally attached.

Fig. 13 is a cross sectional view of Fig. 12 along the line B-B.

Fig. 14 is a cross sectional view of the rear transaxle 20 on which another motor unit 200 is externally attached.

Fig. 15 is a diagram of a hydraulic circuit of the riding lawnmower 100 comprising the rear transaxle 20 to which the motor unit 200 of Fig. 14 is attached.

### DETAILED DESCRIPTION OF THE INVENTION

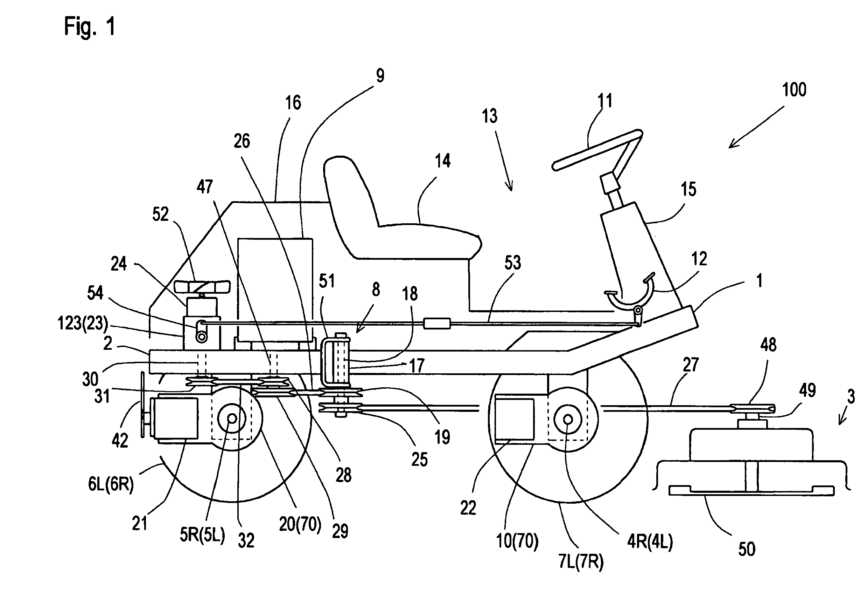

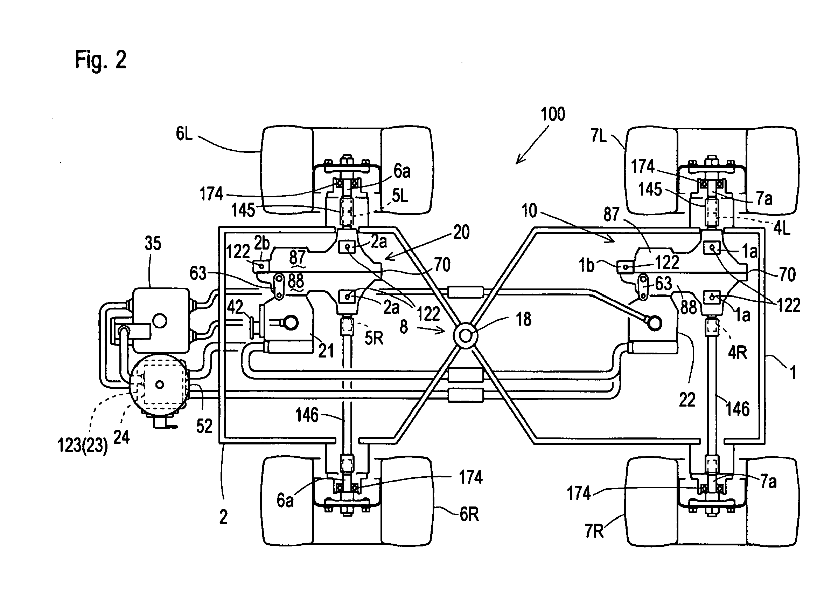

A structure of a riding lawnmower serving as an example of a working vehicle according to the present invention will be described. Figs. 1 and 2 illustrate a riding lawnmower 100 (hereinafter called "vehicle 100") equipped with a mower 3 as a working device in front thereof. A front frame 1 rotatably supports right and left axles 7a of respective front wheels 7R, 7L at right and left end portions thereof through respective bearings 174. A front transaxle 10 is attached to the front frame 1 between the right and left front wheels 7L and 7R. The axles 7a of respective front wheels 7R, 7L are fixedly connected to respective front wheel output shafts 4R, 4L extended rightward and leftward from the front transaxle 10. A rear frame 2 rotatably supports right and left axles 6a of respective rear wheels 6R, 6L at right and left end portions thereof through respective bearings 174. A rear transaxle 20 is attached to the rear frame 2 between the right and left rear wheels 6R, 6L. The axles 6a of respective rear wheels 6R, 6L are fixedly connected to respective rear wheel output shafts 5R, 5L extended rightward and leftward from the rear transaxle 20.

The front transaxle 10 and rear transaxle 20 include respective casings 70 in the same shape. The right and left front wheel output shafts 4R, 4L project outwardly right and left from the casing 70 of the front transaxle 10. The right and left rear wheel output shafts 5R, 5L project outwardly right and left from the casing 70 of the rear transaxle 20. As shown in Fig. 2, the front transaxle 10 and rear trans axle 20 are disposed laterally eccentrically on the respective frame 1 and 2. According to the present embodiment, both of the front transaxle 10 and rear transaxle 20 are offset leftward. The left output shafts 4L, 5L are fittingly provided thereon with respective coupling sleeves 145 so as to be directly and coaxially connected to the respective axles 7a and 6a of the left wheels 7L, 6L, while the right output shafts 4R, 5R are coaxially connected to the respective axles 7a, 6a of the right wheels 7R, 6R though respective extension drive shafts 146. Consequently, large spaces are ensured on the frames 1, 2 above the respective extension drive shafts 146, whereby a variety of devices can be disposed in the spaces.

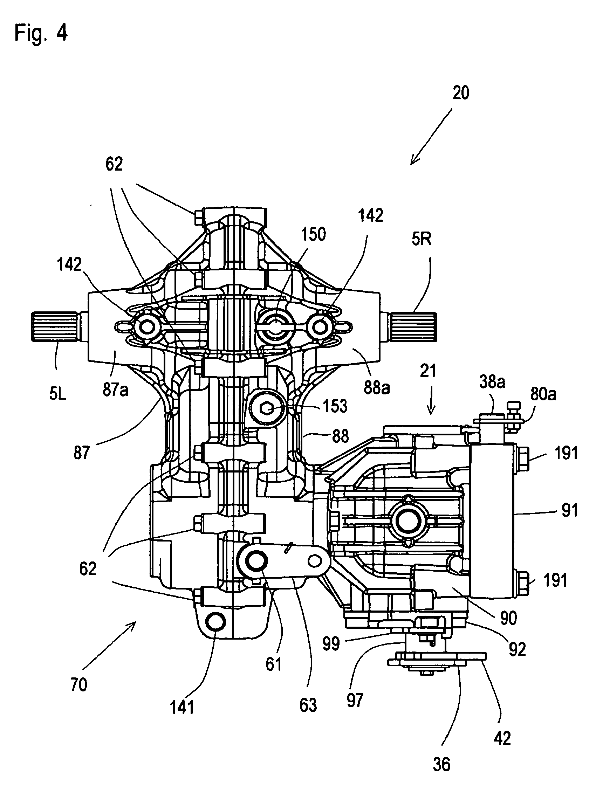

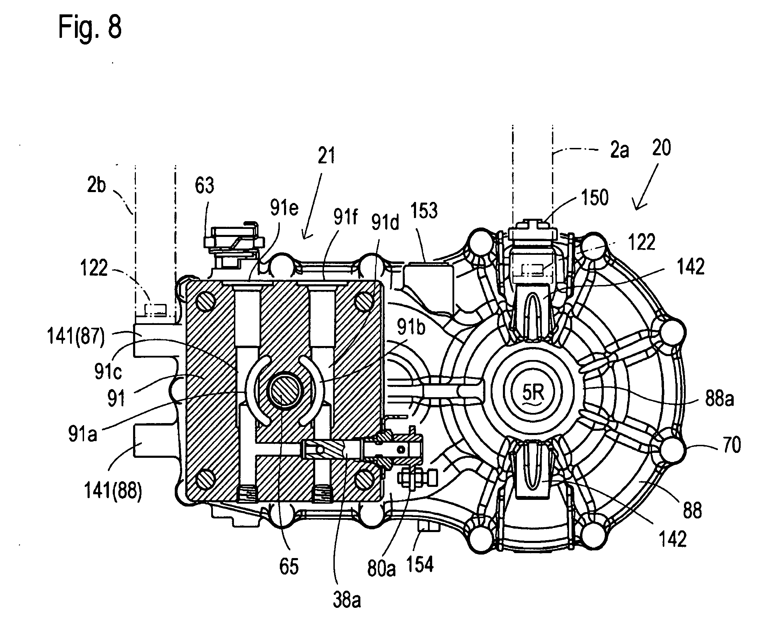

As shown in Figs. 2 and 8, the casing 70 of the front transaxle 10 is attached to a pair of right and left tabs 1a, 1a of the frame 1, and to a tab 1b of the frame 1 backward thereof, with respective bolts 122, thereby being suspended at the triangulation points. The casing 70 of the rear transaxle 20 is also attached to a pair of right and left tabs 2a, 2a of the frame 2, and to a tab 2b of the frame 2 backward thereof, with the respective bolts 122, thereby being suspended at the triangulation points. As shown in Figs. 4, 8 and 9, as detailed later, each of the casings 70 is formed with a pair of right and left mount bosses 142, 142 to be attached to the respective tabs 1a or 2a, and with a mount boss 141 to be attached to the tab 1b or 2b backward from the mount bosses 142, 142.

A motor unit 21 is externally attached on one of the right and left sides of the casing 70 of the rear transaxle 20. A motor unit 22 is externally attached on one of the right and left sides of the casing 70 of the front transaxle 10, In the vehicle 100 of the present embodiment, the respective motor unit 21, 22 are externally attached on the rear right sides of the casings 70 of the respective transaxles 20, 10. A longitudinal direction of the casing 70 (a direction of a line L1 described below) is defined as a fore-and-aft horizontal direction of the vehicle. The location of the rear transaxle 20 in the vehicle 100 as illustrated in Figs. 1 and 2 is referred to in detailed descriptions of the transaxle 20 hereinafter.

As shown in Figs. 1 and 2, a posterior end of the front frame 1 and an anterior end of the rear frame 2 are horizontally rotatably connected to each other in a coupling section 8 as a pivot point. Thus, the vehicle 100 is configured as an articulated-typed vehicle in which the front frame 1 and rear frame 2 are rotatable laterally relative to each other. To give clear detail about the coupling section 8, as shown in Fig. 1, a boss 17 including a vertical shaft hole is fixed on the laterally central rear end portion of the front frame 1. A laid-U-shaped bracket 51 is fixed on the laterally central front end portion of the rear frame 2. The boss 17 is disposed between top and bottom ends of the bracket 51, and the vertical connecting shaft 18 penetrates the bracket 5 and boss 17 so as to pivotally connect the bracket 5 and boss 17 to each other. Consequently, the bracket 51, the boss 17 and the connecting shaft 18 constitute the coupling section 8, which relatively rotatably connects the frames 1, 2 to each other.

As shown in Fig. 1, the front transaxle 10 is suspended downward from the front frame 1. The front frame 1 is provided on an anterior section thereof with a front column 15, a steering wheel 11, a foot pedal 12, a brake pedal (not shown) and the like, are is provided thereon with a driver's seat 14 behind the front column 15, Thus, a driving operation section 13 is configured on the front frame 1. By rotating the steering wheel 11, the front frame 1 and rear frame 2 are rotated laterally relative to each other centered on the connecting shaft 18, so as to turn the vehicle 100. As mentioned later, the foot pedal 12 is an operation device to control a hydraulic pump 23 for speed control of the front transaxle 10 and rear transaxle 20. The brake pedal is an operation device to operate later-discussed brake mechanisms (brake arms 63) equipped in the respective front and rear transaxles 10 and 20.

In a plane view of the vehicle 100, the coupling section 8 is offset toward rotary axes of the rear wheel output shafts 5R, 5L from the center position between rotary axes of the front wheel output shafts 4R, 4L and the rotary axes of the rear wheel output shafts 5R, 5L (equidistance from the rotary axes of the wheel output shafts 4R, 4L and from the rotary axes of the rear wheel output shafts 5R, 5L), so that the front frame 1 is longer in the longitudinal direction than the rear frame 2. Consequently, the driving operation portion 13, i.e., a boarding space for a driver, is widened.

As shown in Fig. 1, an engine 9 is loaded on the rear frame 2, and a hydraulic pump unit 123 incorporating the hydraulic pump 23 is loaded on the rear frame 2 behind the engine 9. A charge pump 24 is disposed on an upper side of the hydraulic pump unit 123, and a pump shaft 30 extended from the hydraulic pump 23 projects from an upper surface of the charge pump 24, and is fixedly provided thereon with a cooling fan 52. Further, as shown in Fig. 2, a reservoir 35 is disposed on the left hand of the hydraulic pump unit 123. The devices, such as the hydraulic pump unit 123, comprising the hydraulic pump 23, the charge pump 24 and the cooling fan 52, and the reserve tank 35, are covered with a hood 16 illustrated in Fig. 1. Incidentally, as shown in Fig. 2, the hydraulic pump unit 123 and reserve tank 35 are described behind the rear frame 2 for reasons of expediency of clearly illustrating the rear transaxle 20. As a matter of fact, as shown in Fig.1, they are loaded on rear frame 2.

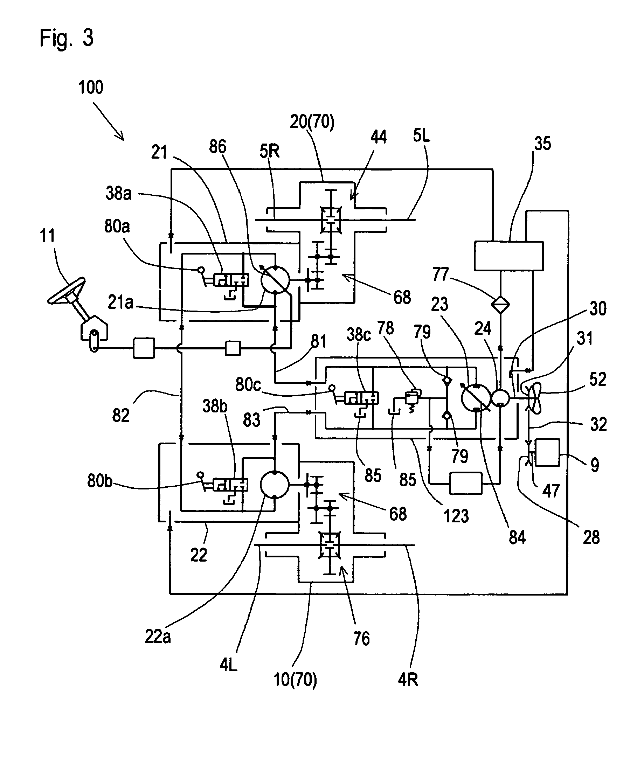

The hydraulic pump 23 is a variable displacement hydraulic pump. As shown in Fig.1, a speed-changing lever 54, which is interlockingly coupled with a movable swash plate 84 of the hydraulic motor 23 (see Fig. 3), is pivoted on a housing of the hydraulic pump unit 123. The speed-changing lever 54 is also interlockingly coupled with the foot pedal 12 located in the driving operation section 13 of the front frame 1 through a wire 53. The foot pedal 12 is a seesaw-typed pedal which can be depressed forward and backward from its neutral position. The speed-changing lever 54 is turned forward or backward according to the direction of depression of the foot pedal 12. The turning degree of the speed-changing lever 54 is determined according to the depression degree of the foot pedal 12. The tilt direction and angle of the movable swash plate 84 are set up in accordance with the turning direction and degree of the speed-changing lever 54. The oil discharge direction and degree of the hydraulic pump 23, i.e., the backward and forward driving direction and speed of the rear wheel output shafts 5R, 5L, are set up according to the tilt direction and angle of the movable swash plate 84.

As shown in Fig. 1, upper and lower engine output pulleys 28, 29 are fixed on a vertical engine output shaft 47 extended from the engine 9 through the rear frame 2. A vertical pump shaft 30 is extended from the hydraulic pump unit 123 parallel to the engine output shaft 47, and is fixedly provided on an end thereof with a pump input pulley 31. A pump drive belt 32 is wound around the engine output pulley 28 and the pump input pulley 31. According to this configuration, an engine output is transmitted from the engine output pulley 28 to the pump input pulley 31 through the pump drive belt 32, thereby rotating the pump shaft 30.

The mower 3 serving as a working device is disposed at the anterior and inferior outside of the front frame 1, The mower 3 includes rotary blades 50 driven by the engine 9 disposed on the rear frame 2. The mower 3 includes an upwardly projecting mower input shaft 49 serving as a drive shaft of the rotary blades 50, and a working-device driving input pulley 48 is fixed on the mower input shaft 49. Upper and lower pulleys 19, 25 are supported on the downwardly-extended portion of the connecting shaft 18 in the coupling portion 8. A first working-device drive belt 26 is wound around the pulley 19 and the pulley 29 on the engine output shaft 47. A second working device drive belt 27 is wound around the pulley 25 and the mower input pulley 48. In this way, a belt transmission assembly for driving the mower, including the pulleys 19, 29, 25, 48 and belts 26 and 27, is configured between the engine output shaft 47 and mower input shaft 49.

A hydraulic circuit system of the vehicle (the riding lawnmower) 100 illustrated in Figs 1, 2 and 3 will be described. The hydraulic pump 23 is arranged in the hydraulic pump unit 123. The hydraulic motor 21 a is arranged in the motor unit 21 externally attached to the rear transaxle 20. The hydraulic motor 22a is arranged in the motor unit 22 externally attached to the front transaxle 10. The hydraulic pump 23, the hydraulic motor 21 a and the hydraulic motor 22a are fluidly connected to one another through fluid passages 81, 82 and 83 constituting a closed circuit, whereby a hydrostatic stepless transmission (hereinafter, " HST") is configured.

The hydraulic pump 23 is incorporated in the hydraulic pump unit 123 on the rear frame 2 so as to be drivingly connected to the engine 9 through the pulleys 31, 28 and the belt 32, as mentioned above. The hydraulic pump 23 is provided with a movable swash plate 84 serving as a pump-displacement control device. The movable swash plate 84 is connected to the speed-changing lever 54 illustrated in Fig. 1. Further, as mentioned above, the charge pump 24 is attached to the hydraulic pump unit 123 so as to be driven together with the hydraulic pump 23 by the pump shaft 30. The charge pump 24 inhales oil from the reservoir 35 through a line filter 77 and discharges it to the hydraulic pump unit 123. The oil discharged from the charge pump 24 is supplied to a pair of check valves 79 connected to of the respective fluid passages 81, 83. The check valve 79 to lower-pressurized one of the fluid passages 81, 83 is opened, and the oil is supplied to the HST closed circuit through the opened check valve 79.

A bypass valve 38c is provided in the hydraulic pump unit 123. The bypass valve 38c is adapted to be opened to release the wheels 6L, 6R, 7L and 7R from the hydraulic pressure in the HST closed circuit so as to allow them to freely rotate during towing of the vehicle 100. The bypass valve 38c is also adapted to be opened to remove air existing in the closed circuit immediately after the closed circuit is made up by loading the hydraulic pump unit 123 and the front and rear transaxles 10, 20 on the vehicle 100. The bypass valve 38c is usually closed as shown in Fig. 3. The bypass valve 38c is compulsorily opened by operating a bypass control lever 80c when necessary, such as towing of the vehicle, thereby draining the oil from the fluid passages 81, 83 to an oil sump 85.

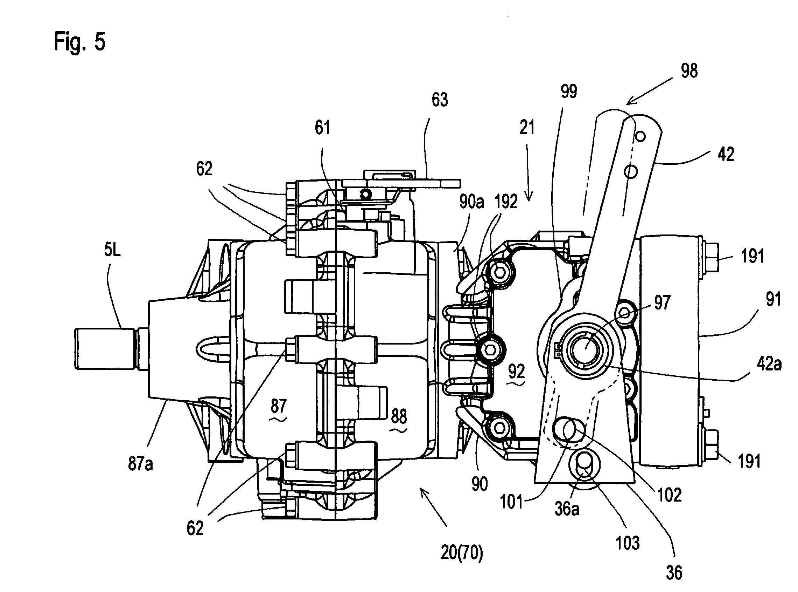

The motor unit 21 placed on the rear transaxle 20, in which the hydraulic motor 21 a is a variable displacement hydraulic motor, includes a movable swash plate 86 serving as a motor-displacement control device. The movable swash plate 86 is connected to an operating arm 42 illustrated in Figs. 5, 6 and 7. Meanwhile, the motor unit 22 placed on the front transaxle 10, in which the hydraulic motor 22a is a fixed displacement hydraulic motor, includes a fixed swash plate. In this way, the motor unit 21 is not provided with an operating member corresponding to the operating arm 42.

Further, a bypass valve 38a is provided in the motor unit 21 (see Fig. 4 and others). The bypass valve 38, as shown in Fig. 3, is usually closed. The bypass valve 38a is compulsorily opened by operating a bypass control lever 80a in necessary cases, such as a case where the vehicle 100 must be towed or a case where air must be removed from the HST closed circuit of the vehicle 100 immediately after the HST closed circuit is made up, thereby draining the oil from the fluid passages 81, 83 to an oil sump in a casing of the externally attached rear motor unit 21. Also, a bypass valve 38b and a bypass control lever 80b are provided in the externally attached front motor unit 22. The bypass valve 38b and bypass control lever 80b have the same configuration and application as those of the bypass valve 38a and bypass control lever 80a.

The reservoir tank 35 is provided to be fluidly connected to the hydraulic pump unit 123 and both of the motor units 21, 22, respectively, so as to control change of oil in volume caused by a temperature alteration of the oil in each of the units 123, 21 and 22. In other words, the hydraulic pump unit 123, motor unit 21 and motor unit 22 each has oil overflowing therefrom absorbed into the reservoir 35 independently of the others of the units 123, 21 and 22.

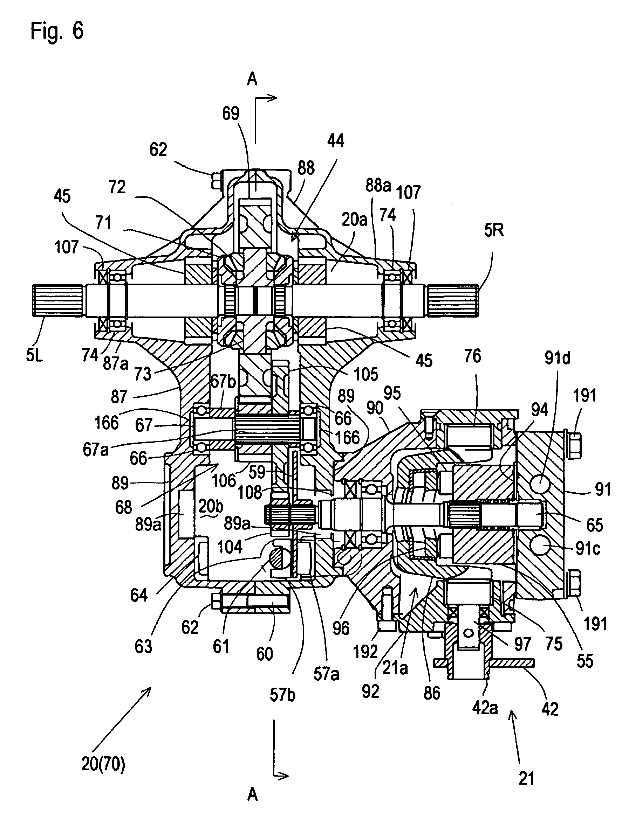

In the rear transaxle 20, a motor shaft 65 projecting from the motor unit 21 and inserted into the rear transaxle 20 (see Fig. 6 and others) is connected to a differential gear unit 44 through a reduction gear train 68. In the front transaxle 10, a motor shaft 65 projecting from the motor unit 22 and inserted into the front transaxle 10 is connected to a differential gear unit 76 through a reduction gear train 68.

The configuration of the front transaxle 10 and rear transaxle 20 will be described with reference to Figs. 1 to 9. As shown in Figs. 1 to 3 and others, the front transaxle 10 and the rear transaxle 20 are identical in structure. The motor units 21 1 and 22 are identical in structure, except for the difference of the respective hydraulic motors thereof, that is, one is variable in displacement and the other is fixed in displacement. Such almost identical motor units 21 and 22 are attached to the casings 70 of the respective transaxle 10, 20. In other words, the rear transaxle 20, having the motor unit 21 attached thereto, and the transaxle 10, having the motor unit 22 attached thereto, are almost identical in entire structure and figuration to each other. Therefore, hereinafter, the combination of the rear transaxle 20 and the motor unit 21 will be described as a representative of the combination of the front transaxle 10 and the motor unit 22. However, it should be noted that the combination of the front transaxle 10 and the externally attached front motor unit 22 is distinctive in that the externally attached front motor unit 22 is a fixed displacement hydraulic motor and is provided with a fixed swash plate, instead of a movable swash plate.

As shown in Fig. 4 and others, the casings 70 are so-called vertically splitable casing, each of which is configured by joining right and left casing halves 87, 88 to each other along a joint surface that is perpendicular to the output shafts 4L, 4R. According to the present embodiment, the casing half with the motor unit 21 is referred to as the casing half 88, and the casing half without the motor unit 21 is as the casing half 87. However, the casing halves 87, 88 are formed by use of a common mold so as to have substantially the same shapes such that they can be joined to each other in a state that one of them is disposed to correspond to the other inverted vertically and laterally. In other words, the two substantially identical casing halves are joined to each other in a state that they are mutually vertically and laterally inverted, thereby constituting the casing 70. Consequently, the only forming of monotypic casing halves is sufficient to produce the casing of the transaxle, thereby economizing the transaxle. If the monotypic casing half is formed with a later-discussed boring for passing the motor shaft therethrough so as to be assembled with the externally attached motor unit, the monotypic casing half is provided as the casing half 88. Unless the monotypic casing half is formed with the boring, the monotypic casing half is provided as the casing half 87. Moreover, due to the vertical-splitability of the casing, each of the right and left output shafts is supported by each of the two right and left casing halves 87, 88, thereby improving endurance of the casing, compared to a horizontally-splitable casing supporting the output shafts by one of casing halves thereof.

As described above, according to the present embodiment, the motor in the motor unit 21 is the hydraulic motor 21 a including the movable swash plate 86, and the motor in the motor unit 22 is the hydraulic motor 22a including the fixed swash plate. Each of the motor units 21, 22, which are externally attached to the respective transaxles, is easily replaceable to another typed motor unit, e.g., a motor unit including an electric motor serving as the motor.

As mentioned above, with regard to the rear transaxle 20, the casing 70 of the transaxle is configured by mutually inverting the casing halves 87, 88 vertically and laterally so as to face cavities thereof to each other, and by joining the casing halves to each other. The differential gear unit 44 and the like are internally attached into the cavity. Incidentally, to join the casing halves 87, 88 to each other, a plurality of holes 60 for joining (see Fig. 6) are perforated in surrounding edges of the respective casing halves 87, 88. When the mutually vertically and laterally inverted casing halves 87, 88 are fitted to each other, the holes 60 of the casing half 87 come to coincide with the respective holes 60 of the casing half 88. Then, both of the casing halves 87, 88 are fastened together by screwing tapping bolts 62 (with respect to Figs. 4, 5) into the respective holes 60, thereby configuring the casing 70.

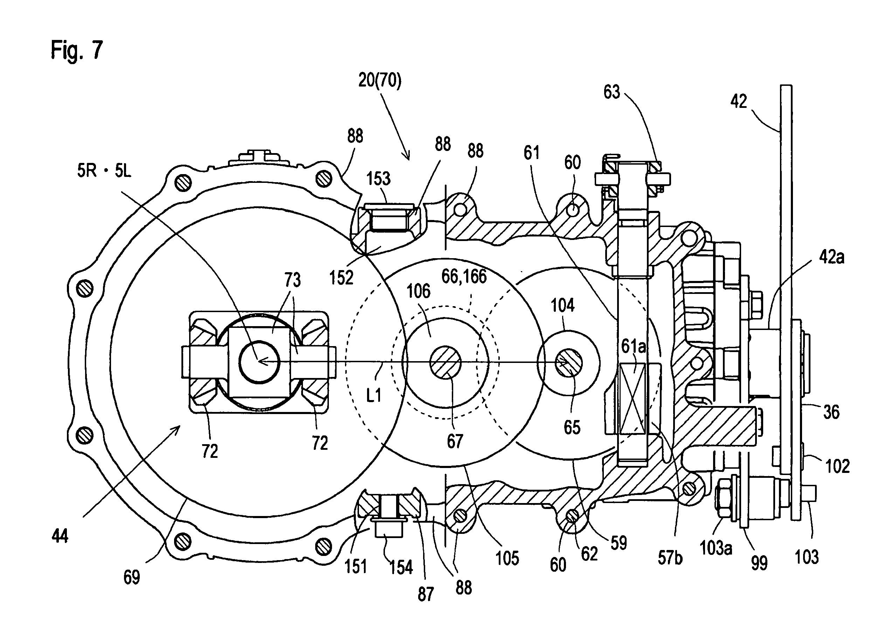

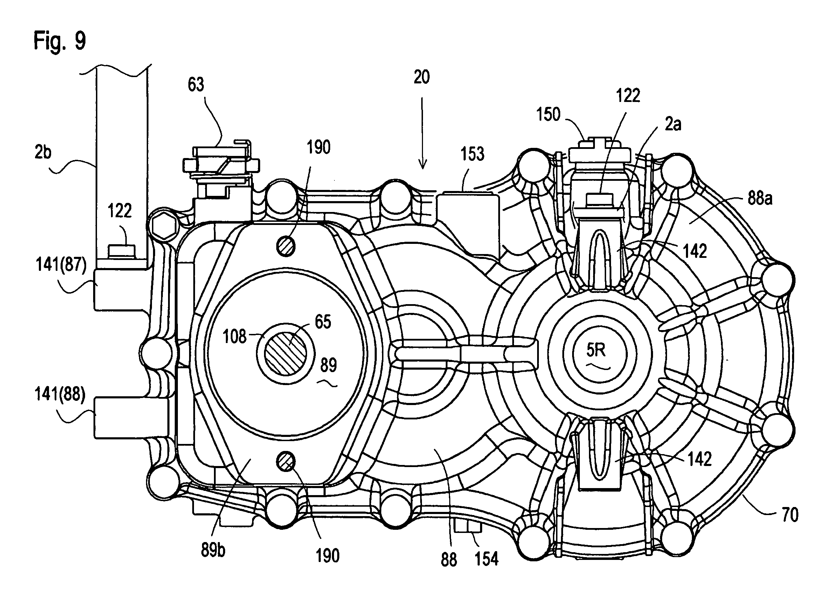

Each of the casing halves 87, 88 is formed with the pair of mount bosses 142, 142 on an after-mentioned output shaft supporting portion 87a or 88a thereof, so that the pair of mount bosses 142, 142 are formed opposite to each other with respect to a line L1 which connects the axis of the motor shaft 65 and the axes of the output shafts 5L, 5R as illustrated in Fig. 7 and as describe below. In this regard, as shown in Figs. 8, 9, when the line L1 is oriented in the longitudinal and horizontal direction, each of the casing halves 87, 88 is formed with the mount bosses 142, 142 on respective upper and lower ends of the output shaft supporting portion 87a or 88a thereof. When the casing 70 is configured by joining the mutually vertically and laterally inverted casing halves 87, 88 to each other, the pair of right and left mount bosses 142, 142 are disposed on the upper surface of the casing 70, and the pair of right and left mount bosses 142, 142 on the lower surface of the casing 70. Referring to Figs. 1, 2, the transaxles 20, 10 are arranged on the lower sides of the respective frames 2, 1. As shown in Figs. 4, 8, and 9, the pair of right and left mount bosses 142, 142 at the upper end of each of the respective casings 70 are fitted to the respective tabs 2a (or respective tabs 1a) of the frame 2 (or the frame 1), and are fastened to the respective tabs 2a (tabs 1a) with the bolts 122.

Moreover, on a portion of each of the casing halves 87, 88 opposite to the mount bosses 142, 142 in the direction of line L1 (the portion is the rear portion of each of the casing halves 87, 88 backward from the output shaft support portions 87a or 88a, on the assumption that the output shaft support portions 87a or 88a are disposed at the front portion of the casing 70), the mount boss 141 is formed (so as to be backwardly-projected) on one side (on the above assumption, on the upper or lower side) of the line L1. Consequently, when the casing 70 is configured by joining the mutually vertically and laterally inverted casing halves 87, 88 to each other, as shown in Figs. 8,9, one mount boss 141 is disposed on the upper side of one of the casing halves 87, 88, and the other mount boss 141 is disposed on the lower side of the other of the casing halves 87, 88. In the vehicle 100 according to the embodiment of Figs. 1, 2, as shown in Figs. 4, 8 and 9, the mount boss 141 on the upper side (of the casing half 87) is used to attach the casing 70 to the tab 2b (or the tab 1b) of the frame 2 (or the frame 1), as shown in Figs. 4, 8 and 9. In this way, the casing 70 is configured so as to be supported by the frame 2 (or frame 1) at the three points thereof, i.e., the mount boss 141 and the pair of right and left mount bosses 142, 142 in front of the mount boss 141.

On an end portion of each of the output shaft supporting portions 87a, 88a of the respective casing halves 87, 88, and on one side of the line L1 (on the upper or lower side of the line L1, when the line L1 is oriented in the longitudinal and horizontal direction), a breather part onto which a breather cap 150 is attached is formed adj acent to one of the pair of mount bosses 142, 142. When the casing 70 is configured by joining the mutually vertically and laterally inverted casing halves 87, 88 to each other, one breather part is disposed on the upper side of one of the casing halves 87, 88, and the other breather part is disposed on the lower side of the other of the casing halves 87, 88. In the vehicle 100 according to the embodiment of Figs. 1, 2, as shown in Fig. 4, the breather cap 150 is attached onto the breather part on the upper side (of the casing half 88).

Further, on an end portion of each of the output shaft supporting portions 87a, 88a of the respective casing halves 87, 88, an oil hole 151(with respect to Fig. 7) is opened on one side (the upper or lower side on the assumption that the line L1 is oriented in the longitudinal and horizontal direction) of the line L1. When the casing 70 is configured by joining the mutually vertically and laterally inverted casing halves 87, 88, one oil hole 151 is disposed on the upper side of one of the casing halves 87, 88, and the other oil hole 151 is disposed on the lower side of the other of the casing halves 87, 88. In the vehicle 100 according to the embodiment of Figs. 1, 2, the oil hole 151 on the upper side (of the casing half 88) is broadened in aperture so as to serve as a proper oiling hole 152 (see Fig. 7), and the oiling hole 152 is closed by a tap 153, as shown in Fig. 4. The oil hole 151 on the lower side of (the casing half 87) is used as a drain and is normally closed by a plug 154 (see Fig. 7).

The cavity of the casing 70 serves as a first chamber 20a and a second chamber 20b, which are connected to each other. The first chamber 20a incorporates the differential gear unit 44. The second chamber 20b incorporates the motor shaft 65, which is inserted into the second chamber 20a from the rear motor unit 21 externally attached to the casing as the casing halves 87, 88 screwed to each other. In this way, a driving force of the hydraulic motor 21 a is transmitted to the differential gear unit 44 through the reduction gear trains 68.

As shown in Figs. 6 and 9, a motor unit attachment surface 89 is formed to be concave inward on an outside surface of each of the casing halves 87, 88. The motor unit attachment surface 89 of the casing half 88 is perforated at the center thereof by an inward and outward opened shaft hole 108 for passing the motor shaft therethrough. The motor unit attachment surface 89 of the casing half 87 is not perforated by such a shaft hole 108. In other words, the casing half 87 without the shaft hole 108 can be easily bored to have the shaft hole 108 so as to serve as the casing half 88 8 to which the motor unit is attached. In this regard, to facilitate the boring of the shaft hole 108, a recessed portion 89a is formed on an inner surface of a wall defined as the motor unit attachment surface 89 of each of the casing halves 87, 88 so as to reduce the thickness of the wall to be bored by the shaft hole 108.

An after-mentioned motor casing 90 of the motor unit 21 is engagingly attached onto the motor unit attachment surface 89 of the casing halves 87 of the transaxle 20, whereby the motor unit 21 is integrated with the transaxle 20. Also, the motor shaft 65 of the motor unit 21 is extended from the motor unit attachment surface 89 and is inserted into the second chamber 20b of the transaxle 20 through the shaft hole 108 perpendicular to the motor unit attachment surface 89, i.e., laterally horizontally.

The motor casting 90, a side cover 92 and a fluid passage plate 91 are assembled so as to constitute a housing of the motor unit 21. As described above, one side surface of the motor casing 90 is fitted to the motor unit attachment surface 89, and the fluid passage plate 91 is fixed on an outer surface of the motor casing 90. The fluid passage plate 91 is fastened to the motor casing 90 with bolts 191 (Figs. 4, 5 and 6). The side cover 92 is fastened to the motor casing 90 (Figs. 5, 6) with bolts 192. The motor casing 90 is fastened to the casing half 88 of the casing 70 with bolts 190. With regard to the fastening of the motor casing 90 to the casing 70, as shown in Fig. 5, a flange 90a is formed on the inner end of the motor casing 90. The flange 90a is tightly attached to a flange contact face 89 formed on the casing half 88 around the motor unit attachment surface 89 as shown in Fig. 9, so as to be fastened to the casing half 88 with the bolts 190.

As shown in Fig. 6, with regard to the hydraulic motor 21, a valve plate 94 is fixed on a motor attachment surface 93 of the fluid passage plate 91. A cylinder block 55 into which pistons 95 are reciprocally fitted is slidably and rotatably engaged on the valve plate 94. The cylinder block 55 is relatively unrotatably engaged on the motor shaft 65 arranged on the rotary axis thereof. Heads of the pistons 95 contact a thrust bearing 96 of the movable swash plate 86. The motor shaft 65 is freely rotatably passed through the movable swash plate 86, and is passed through the shaft hole 108 into the second chamber 20b of the transaxle 20.

As shown in Figs. 6 and 8, the fluid passage plate 91 is perforated by a pair of kidney ports 91a, 91b opened at the motor attachment surface 93, and by vertical oil holes 91c, 91d communicating with the respective kidney ports 91 a, 91b. Upper ends of the oil holes 91 c, 91 d are provided on the top end surface of the fluid passage plate 91 so as to serve as outwardly-opened ports 9 1 e, 91 f. Pressure oil pipes or the like connected to the hydraulic pump 23 of the hydraulic pump unit 123 illustrated in Figs. 1 to 3 and to the hydraulic motor 22a of the motor units 22 are connected to the ports 91e, 91f. Since both of the ports 91e and 91 f are disposed on the top end surface of the fluid passage plate 91 when the transaxle 20 is supported by the frame 2 as shown in Fig. 8, the pressure oil pipes or the like can be easily treated to be connected to the respective ports 91 e and 91f.

As shown in Figs. 4, 6 and 8, the bypass valve 38a as a cylindrical rotary valve is rotatably intruded horizontally into the fluid passage plate 91, and is fixedly provided on the outer end thereof with the bypass control lever 80a. When the bypass control lever 80a is set at a non-bypass position as usual, the bypass valve 38a separates the oil holes 91c and 91 d from each other. When the bypass control lever 80a is set at a bypass position, the bypass valve 38a is opened and connects oil holes 91 c and 91d to each other so as to bypass the hydraulic motor 21. The bypass valve control lever 80a is disposed on a surface of the fluid passage plate 91 directed to the output shaft 5R (on the front surface of the fluid passage plate 91 in case that the transaxle 20 is arranged as shown in Figs. 1 and 2). Alternatively, the bypass valve control lever 80a may be disposed on the opposite surface (on the rear surface in the above-mentioned case).

The movable swash plate 86 includes a pair of trunnion shafts 75, 76 located on opposite sides of the motor shaft 65. The trunnion shaft 76 is rotatably supported by a sidewall of the motor casing 90. The trunnion shaft 75 is rotatably supported by the side cover 92. The outer end portion of the trunnion shaft 75 is an arm shaft 97 which is extended outward from the side cover 92. A boss portion 42a of the operating arm 42 is fixed on the outer end of the arm shaft 97. A state of turning operation of the steering wheel 11 in the driving operation section 13 or a flexional state of the front frame 1 and rear frame 2 is transmitted to the operating arm 42 through link members such as a connecting rod or a wire. More specifically, a tilt angle of the movable swash plate 86 is altered according to the change of turning angle of the vehicle 100, so that a rotary speed of the rear output shafts 5R, 5L is increased or reduced relatively to a rotary speed of the front output shafts 4R, 4L driven by the fixed displacement hydraulic motor 22a.

The vehicle 100 turns around a turning center that is an intersection of an extended center axial line of the right and left rear wheel output shafts 5L, 5R and an extended center axial line of the right and left front wheel output shafts 4L, 4R. The front frame 1 and the rear frame 2 are flexed at the coupling section 8 during turning of the vehicle 100. The distance of the turning center from the middle point between the right and left rear wheel 6R, 6L is longer than that from the middle point between the right and left front wheels 7R, 7L because the front frame 1 is longitudinally longer than the rear frame 2. Consequently, when the rotary speed of the front wheel output shafts 4R 4L is equal to the rotary speed of the rear wheel output shafts 5R, 5L, the rear wheels 6R, 6L requiring a larger rotary speed are dragged, thereby damaging delicate road surfaces, such as turf, and accelerating the abrasion of the wheels. However, as a steering angle of the steering wheel 11 is increased, the movable swash plate 86 is interlockingly moved to reduce the motor displacement so as to increase the rotary speed of the rear wheel output shafts 5R, 5L. In this way, the relative rotary speed of the front wheels 7R, 7L to the rear wheels (6R, 6L) can be adjusted, thereby enabling the vehicle to turn without the drag of the wheels. Referring to Fig. 5, the operating arm 42 drawn in continuous lines is defined as that located during traveling of the vehicle. When the vehicle fully turns, the operating arm 42 is tilted leftward in Fig. 5 (so as to reach a full turn position 98 drawn in two-point broken lines).

Incidentally, if the coupling section 8 is disposed at a center position between the rotary axes of the front wheel output shafts 4R, 4L and the rotary axes of the rear wheel output shafts 5R, 5L, the adjustment of rotary speed between the front wheels and rear wheels during turning of the vehicle is not needed. In this regard, both of the hydraulic motors attached to the front and rear transaxles 10, 20 may be fixed displacement types.

Further, as shown in Figs. 5 and 7, a fixture plate 36 is relatively rotatably pivoted on the boss portion 42a of the operating arm 42 on the outside of the operating arm 42. A stopper plate 99 is fixed on an outer side surface of the side cover 92 at the inside of the operating arm 42. The operating arm 42 is rotatable integrally with a narrow shaft 97 defined as the distal end of the trunnion shaft 75. A rotatable pin 102 is fixed on the operating arm 42 and is passed through an arcuate chase 101 provided in the fixture plate 36, so that a rotatable range of the rotating pin 102, i.e., a turnable range of the operating arm 42 is defined by an area of the arcuate chase 101 between both ends thereof. A fixed pin 103 projects from the stopper plate 99 and is inserted into a slot 36a of the fixture plate 36 so as to retain the fixture plate 36 unrotatably centered on the boss portion 42a. A portion of the fixed pin 103 to be screwed together with the stopper plate 99 is decentered from a main body portion of the fixed pin 103 to be engaged to the fixed plate 36. By loosening a nut 103a retaining the fixed pin 103 to the stopper plate 99, the fixture plate 36 can be rotated around the boss portion 42a so as to adjust the position of the arcuate chase 101. In this way, the rotatable range of the operating arm 42 is accurately adjusted, and an excessive stroke of the operating arm 42 is prevented, thereby protecting inner parts of the hydraulic motor 21.

The structure in the second chamber 20b of the transaxle 20, into which the motor shaft 65 is inserted, will be described with reference to Figs. 6 and 7 and others. The motor shaft 65 is extended in the casing 70 so as to double as an input shaft of the transaxle 20, and is fixedly provided on a tip thereof with a motor output gear 104 and a brake disc 59. A brake mechanism for braking the motor shaft 65, including the brake disc 59, is disposed in the second chamber 20b. The brake mechanism will be described. The brake disc 59 is located between the friction members 57a and 57b. A vertical brake camshaft (brake operating shaft) 61 is rotatably supported on the casing half 88 (perpendicular to the motor shaft 65 and the output shaft 5L and 5R). The brake camshaft 61 is projected from the upper side of the casing half 88 and is fixedly provided thereon with the brake arm 63. The brake camshaft 61 is rotatably intruded at a bottom end thereof into a boss formed on a bottom wall of the casing half 88, and an upper wall of the casing half 88 rotatably supports a portion of the brake camshaft 61 toward the brake arm 63 attached thereto. In the casing 70 (casing half 88), a lower portion of the brake camshaft 61, having a certain axial length, is notched in a sectionally semicircular shape so as to have a vertical cam surface 61 a. A sectionally horseshoe-shaped friction member 57b is externally attached onto the shaft 61 so as to confront the cam surface 61a. The friction member 57a is fixedly fitted into a brake pad receiving recess 64 formed on an inner wall of the casing 70 (casing half 88) opposite to the friction member 57b with respect to the brake disc 59.

If the brake arm 63 is disposed at a non-brake position when the brake pedal is not depressed on, the cam surface 61a is parallel to the confronting surface of the friction member 57b spacing a fixed distance, and the brake disc 59 separates from the friction members 57a, 57b on opposite sides thereof, so that the motor shaft 65 is rotatable, i.e., the rear wheel output shafts 5 R, 5 L are rotatable. If the brake arm 63 is disposed at a brake position when the brake pedal is depressed on, the camshaft surface 61 a is tilted and pressed against the friction disc 57b at one of outside edges thereof. The friction member 57b slides in the axial direction of the motor shaft 65 toward the brake disc 59, so that the brake disc 59 is pressed and held between the friction members 57a and 57b, thereby braking the motor shaft 65, i.e., the rear wheel output shafts 5R, 5L.

Both of the casing halves 87 and 88 are configured so as to accommodate components of the above-mentioned brake mechanism. For example, each of the casing halves 87, 88 is formed with the boss portion for pivoting the brake camshaft 61 serving as the brake operating shaft, and is formed with the brake pad receiving recess 64. According to the present embodiment, as described above, the brake mechanism is arranged in the casing half 88 close to the attachment side of the motor (on the left side in Fig. 6), thereby reducing the length of a portion of the motor shaft 65 from the hydraulic motor 21a to the brake disc 59, and thereby reducing the required braking force of the brake mechanism. Consequently, the brake mechanism can be miniaturized. Also, in the second chamber 20, a space is ensured in the casing half 87 without the brake mechanism, distant to the attachment side of the motor, so that other implements (for example, an after-mentioned clutch) can be disposed in the space.

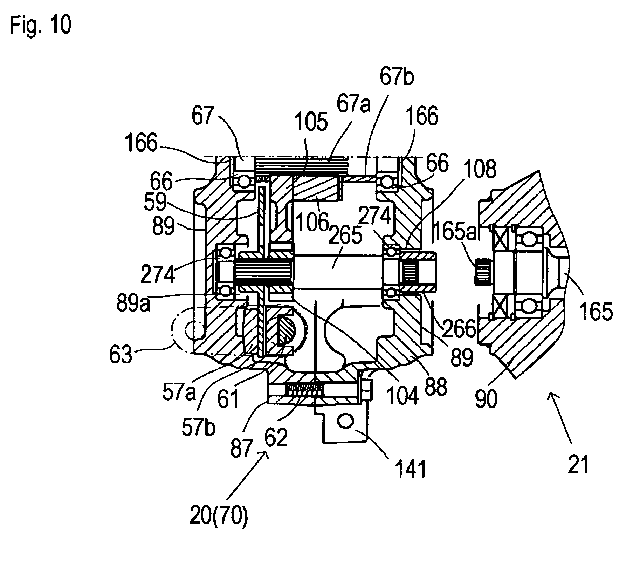

Here, referring to Fig. 10, description will be given of an alternative embodiment where a motor shaft 165 supported by the motor unit 21 is shortened in length thereof so as not to be extended into the inner part of the rear transaxle 20. In the transaxle 20, an input shaft 265 is supported at both ends thereof by respective bearings 274 intruded into the sidewall defining the recessed portion 89a of each of the casing halves 87, 88. According to the present embodiment, the above-mentioned brake components, including brake camshaft 61 and the friction members 57a, 57b, are disposed in the casing half 87 laterally opposite to the attachment side of the motor unit 21. The brake disc 59 and the motor output gear 104 are also fixed on the input shaft 256 in the casing half 87.

In the casing half 88, the center of the recessed portion 89a of the motor unit attachment surface 89 is penetrated by the shaft hole 108 leading to the inner part of the casing. An end of the input shaft 256 to be connected to the motor shaft 156 is a spline end. A spline collar 266 is arranged in the shaft hole 108, and is formed on the inner peripheral surface thereof as a spline, and the spline end of the input shaft 256 is spline-fitted into the spline collar 266. When the motor unit 21 is attached to the rear transaxle 20, a spline end 165a of the motor shaft 165 supported on the motor unit 21 is spline-fitted into the spline collar 266 in the shaft hole 108, thereby rotatably integrally and coaxially connecting the motor shaft 156 and 256 to each other. To detach the externally attached motor unit 21 from the rear transaxle 20, the spline end 165a of the motor shaft 165 is naturally detached from the spline collar 266 only by unscrewing the bolt 190 and by separating the casing 90 from the motor unit attachment surface 89. In this way, according to the embodiment of Fig. 10, the externally attached motor unit 21 can be easily attached to or detached from the rear transaxle, 20 without the need to disassemble the casing 70 (to separate the casing halves 88, 87 from each other).

Further, in the casing 70, a counter shaft 67 is rotatably disposed parallel to the motor shaft 65. Each of the casing halves 87 and 88 is formed with a recessed portion 166 into which a bearing 66 for journaling each of both ends of the counter shaft 67 can be fitted. When the casing halves 87, 88 are inverted mutually vertically and laterally and confronted to be joined to each other, the recessed portions 166, 166 of the respective casing halves 87, 88 coaxially confront each other. Accordingly, the counter shaft 67 is supported at the right and left ends thereof by the respective casing halves 87, 88 joined as the casing 70 without axial deviation from each other. As a result, the counter shaft 67 is supported by the casing 70 so as to be oriented parallel to the motor shaft 65 without tilting.

Between the both ends of the counter shaft 67 (between the bearings 66 and 66), the outer circumference of the counter shaft 67 from one axial end thereof to an axial central portion thereof is formed as a spline 67a. A large diameter gear 105 and a small diameter gear 106 are relatively unrotatably spline-fitted onto the spline 67a. The large diameter gear 105 meshes with the motor output gear 104 fixed on the motor shaft 65. The small diameter gear 106 meshes with a bull gear 69 of the differential gear unit 44. The reduction gear train 68, which transmits a drive power from the motor shaft 65 to differential gear unit 44, is composed of the gears 105 and 106. The small diameter gear 106 is disposed on the axial central portion of the counter shaft 67, i.e., at the laterally central region of the transaxle 20. The outer circumference surface of the counter shaft 67 axially opposite to the large diameter gear 105 with respect to the small diameter gear 106 is formed with no spline, and it is provided thereon with a spacer collar 67b.

In this way, the large diameter gear 105 and spacer collar 67b are disposed on the counter shaft 67 opposite to each other with respect to the small diameter gear 106 so as to be distributively disposed in the casing half 88 and in the casing half 87. Each of the large diameter gear 105 and spacer collar 67b is decided to be disposed in either of the casing halves 88 and 87 depending on whether the motor output shaft 104 that meshes with the large diameter gear 105 is provided on the motor shaft 65 (or the input shaft 265) in the casing half 88 or in the casing half 87. In the embodiment of Fig. 6, the mutually meshing motor output gear 104 and large diameter gear 105 are disposed in the casing half 88. In the embodiment of Fig. 10, they are disposed in the casing half 87. The spline 67a can be arranged at a position corresponding to the large diameter gear 105 only by axially inverting the counter shaft 67 depending on whether the large diameter gear 105 is disposed in the casing half 88 or in the casing half 87.

Since the spline is formed on the motor shaft 65 or input shaft 265 in the rear transaxle 20 so as to have the motor output gear 104 and the brake disc 59 adjoining fitted thereon, the brake mechanism is disposed together with the motor output gear 104 in one of the casing halves 88 and 87. In this regard, as described above, the brake mechanism is arranged with the motor output gear 104 in the casing half 88 according to the embodiment of Fig. 6, and both of the brake mechanism and the motor output gear 104 are arranged in the casing half 87 according to the embodiment of Fig. 10. Therefore, the large diameter gear 105 is disposed with the brake mechanism and the motor output gear 104 in one of the casing halves 87 or 88. Alternatively, the brake mechanism may be disposed in one of the casing halves 87 and 88, and the motor output gear 104 may be arranged in the other of them. Also, the large diameter gear 105 may be disposed in the casing half 87 or 88 opposite to the casing half 87 or 88 in which the brake mechanism is arranged.

The inner structure in the first chamber 20a of the transaxle, in which the differential gear unit 44 is disposed, will be described with reference to Figs. 6 and 7 and others. The differential gear unit 44 includes a bull gear 69 meshing with the small diameter gear 106, pinions 72 rotatably supported on a pinion shaft 73 inwardly projected from the inner circumference of the bull gear 69, and side gears 71 fixed on the respective rear wheel output shafts 5R, 5L and meshing with the pinions 72 from left and right sides. Proximal ends of the respective rear wheel output shafts 5R, 5L are relatively rotatably fitted into a central shaft hole of the pinion shaft 73. In this way, the transaxle 20 is configured to transmit the drive power of the motor shaft 65 (or input shaft 265) to the rear wheel output shafts 5R, 5L through the reduction gear train 68, the bull gear 69, pinions 72 and side gears 71 in this order.

The casing halves 87 and 88 are formed with respective bugle(horn)-shaped output shaft supporting portions 87a, 88a extending in the axial direction of the respective rear wheel output shafts 5R, 5L (laterally) so as to support the respective output shafts 5R, 5L. The output shaft supporting portions 87a and 88a are provided at end portions thereof with respective shaft holes for passing the respective output shafts 5L and 5R, and the shaft holes are arranged coaxially opposite to each other when the mutually vertically and laterally inverted casing halves 87, 98 are confronted to be joined to each other. Consequently, the right and left output shafts 5L and 5R are supported by the respective casing halves 87 and 88 joined to each other as the casing 70, and are also supported by the casing 70 in a state of being disposed coaxially to each other. The first chamber 20a incorporating the differential gear unit 44 is formed between the output shaft supporting portions 87a and 88a in the casing 70 formed in this way.

In the respective output shaft supporting portions 87a and 88a, the output shafts 5L and 5R are supported by respective bearing bushes 45 located adjacent to the right and left ends of the differential gear unit 44, and are supported by respective bearings 74 located on the outer ends of the respective output shaft supporting portions 87a and 88a. In other words, the casing 70 configured by joining the casing halves 87 and 88 to each other is provided in the left portion thereof with a left-hand set of the bearing bush 45 and bearing 74, supporting the left output shaft 5L, and is provided in the right portion thereof with a right-hand set of the bearing bush 45 and bearing 74, supporting the right output shaft 5R. Further, an oil seal 107 is placed directly at the outer side of the bearing 74 in the outer end of each of the output shaft supporting portions 87a and 88a. The output shaft supporting portions 87a, 88a of the casing halves 87, 88 are formed with respective circular holes at basal ends thereof facing each other, and the bearing bushes 45 are fitted into the respective circular holes. Each of the bearing bushes 45 is furrowed on the outer peripheral surface thereof with a considerable number of axial chases so as to lead oil therethrough toward the corresponding bearing bush 74 axially outwardly distant from the bearing bush 45.

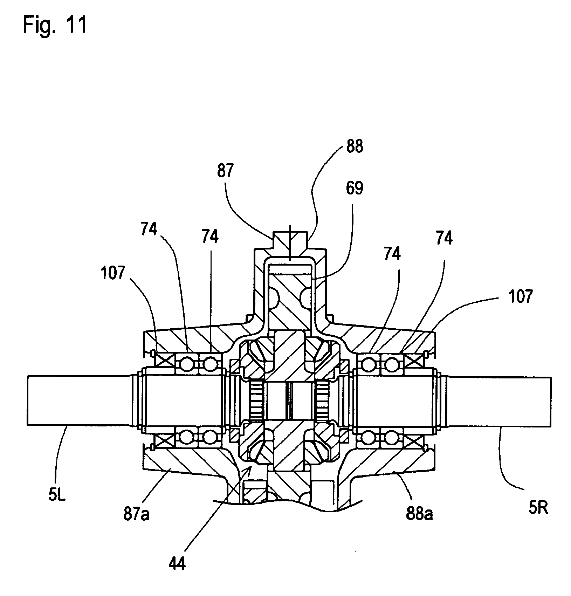

Alternatively, as shown in Fig. 11, in each of the respective right and left casing halves 87, 88, a pair of adjoining bearings 74 may be provided in place of the bearing bush 45 and bearing 74 (i.e., a pair of adjoining bearings 74 are provided in the left portion of the casing 70 supporting the left output shaft 5L, and a pair of adjoining bearings 74 are provided in the right portion of the casing 70 supporting the right output shaft 5R). In this way, the strength of the bearings 74 against load is increased, so that, as shown in Fig. 11, each pair of adjoining bearings 74, 74 are disposed adjacent to each of the right and left ends of the differential gear unit 44. Further, the output shaft supporting portions 87a and 88a of the respective casing halves 87, 88 are shortened in the axial direction of the output shafts 5R, 5L (i.e., laterally), thereby laterally miniaturizing the rear transaxle 20. Accordingly, other implements can be provided in an outside space of the rear transaxle 20.

As shown in Figs. 4, 6 and 7, the motor shaft 65, counter shaft 67 and the rear wheel output shafts 5R, 5L, which are supported by the casing 70 comprising the casing halves 87, 88, are arranged parallel to one another, and axial centers of these shafts are aligned on the (substantially horizontal, if they are arranged in the vehicle 100 as shown in Figs. 1 and 2) line L1 (see Fig. 7, the line L1 is substantially horizontal in the traveling direction of the vehicle 100 if these shafts are arranged in the vehicle 100 as shown in Figs. 1 and 2). As a result, the rear transaxle 20 (casing 70) is configured to be long in the direction of the line L1 (in the anteroposterior direction of the vehicle 100 when it is disposed on the vehicle 100 as Figs. 1 and 2) and to be short in the direction perpendicular to the line L1 (in the vertical direction of the vehicle 100 when it is disposed on the vehicle 100 as Figs. 1 and 2).

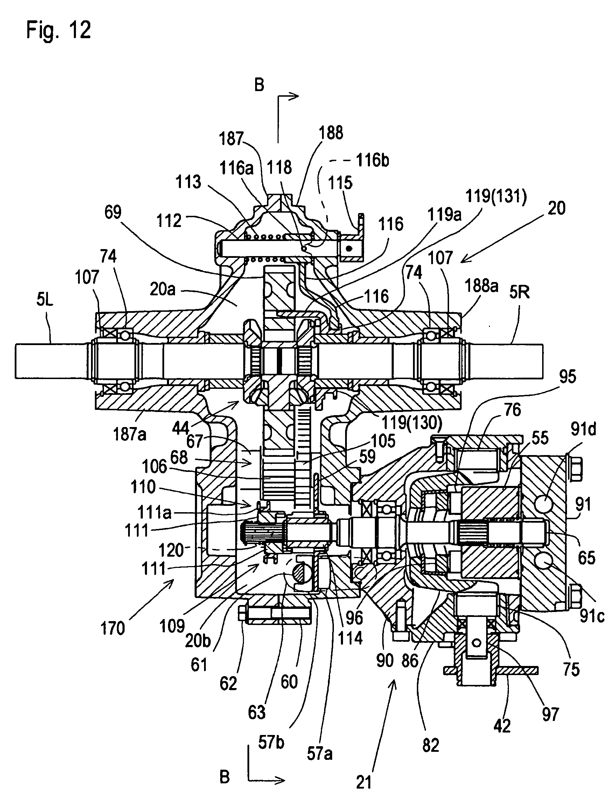

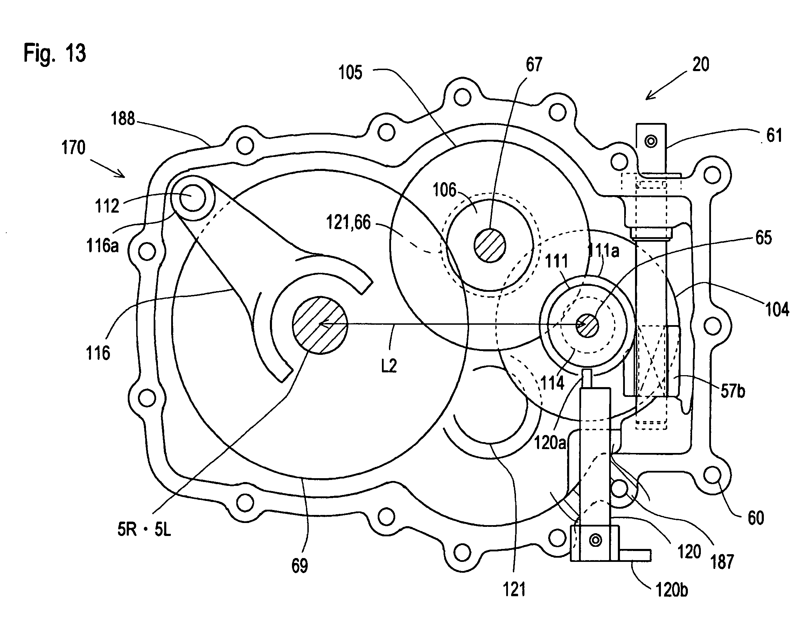

Alternatively, as shown in Figs. 12 and 13, a casing 170 constituted by joining a casing half 187 with a motor to a casing half 188 without a motor may be used as a casing of the rear transaxle 20. Incidentally, the casing halves 187, 188 are the same in structure as the casing halves 87, 88, except a structure as describe below. A pair of recesses 121, 121 are formed to be symmetric with respect to a line L2 connecting the axial center of the motor shaft 65 to the axial center of the output shaft 5L, 5R (vertically symmetric when they are disposed on the vehicle 100 as Figs. 1 and 2) so that respective bearings 66 for supporting the respective ends of the counter shaft 67 are fitted into the respective recesses 121.

When the casing 170 with the mutually joined casing halves 187 and 188 is adapted, the counter shaft 67 can be arranged so as to have the axis thereof on one side (either the upper side or the lower side, if it is disposed as shown in Figs. 1 and 2) of the line L2 connecting the motor shaft 65 to the rear wheel output shafts 5R, 5L in the direction perpendicular to the line L2. In this regard, it is now assumed that a pair of first and second casing halves, one of which is the casing half 187 without the motor, and the other of which is the casing half 188 with the motor, are oriented to coincide to each other in the vertical and lateral directions, so that the motor shaft 65 is located ahead and the output shafts 5L, 5R are located behind, and so that the line L2 connecting between the axis of the motor shaft 65 and the axes of the output shafts 5L, 5R is oriented in the longitudinal horizontal direction. In this assumption, the upper recesses 120 of both of the casing halves are referred to as X, and the lower recesses 120 thereof are referred to as Y. When one of the first and second casing halves is vertically and laterally inverted relative to the other casing half and is joined to the other casing half, one pair of right and left coaxially opposite X and Y are formed above the line L2, and another pair of right and left coaxially opposite X and Y below the line L2. Accordingly, either the pair of X and Y above the line L2 or the pair of X and Y below the line L2 is selected so as to support the opposite ends of the counter shaft 65 through the bearings 66, 66.

In the rear transaxle 20 comprising the casing 170 constituted by joining the casing halves 187 and 188 to each other, the line L2 is shorter than the line L1 of the rear transaxle 20 comprising the casing 70 of the preceding embodiment, due to the offset arrangement as described above. In other words, the transaxle 20 according to the present embodiment is longer in the direction perpendicular to the line L2 (in the vertical direction when it is disposed as Figs. 1 and 2), but it is shorter in the direction of the line L2 (in the anteroposterior direction when it is disposed as Figs. 1 and 2). Either the rear transaxle 20 including the casing 70 or the rear transaxle 20 including the casing 170 can be selected for use in correspondence to the size, design and the like of the applicable vehicle.

Also, in the rear transaxle 20 according to the embodiment as illustrated in Figs. 12 and 13, a motor resistance prevention clutch 111 is provided on the motor shaft 65 in the second chamber 20b, instead of the bypass valve 38a as illustrated in Figs. 3 and 4, so as to avoid a motor resistance against the wheel rotation when the vehicle is towed. According to the present embodiment, a motor gear 114 replacing the motor gear 104 is not fixed on the motor shaft 65 but is relatively rotatably fitted on it. The clutch 111 is axially slidably and relatively unrotatably fitted on the motor shaft 65 in order to engage or disengage to and from the motor gear 114. In Fig. 12, as a matter of convenience, the clutch 111 at a clutch-on position 109 is illustrated on one side of the motor shaft 65, and the clutch 111 at a clutch-off position 110 is illustrated on the other side of the motor shaft 65.

A ring 111a having an annular chase is fixed on the clutch 111. A clutch-operating shaft 120 is journalled by the casing half 187, and a pin 120a, which is eccentrically projected from the clutch-operating shaft 120, is intruded into the annular chase of the ring 111a. A clutch lever 120b is fixed on the outer end of the clutch-operating shaft 120 on the outer side of the casing 170. When the clutch lever 120b is rotated, the clutch-operating shaft 120 is rotated around the center axis thereof, and accordingly, a position of the pin 120a is axially transferred in the axial direction of the motor shaft 65. Consequently, the clutch 111 is switched between the clutch-on position 109 and the clutch-off position 110.

Further, both of the casing halves 187 and 188 are formed with respective boss portions for supporting the clutch-operating shaft 120. According to the present embodiment using the casing 170, as well as the preceding embodiment using the casing 70, the brake camshaft 61 is supported on the casing half 188 to which the motor is attached, and other relevant components of the brake mechanism are also disposed in the casing half 188, whereby there is a large space in the casing half 187 to which the motor is not attached. The clutch 111 is located in this space, and the clutch-operating shaft 120 is supported on the casing half 187. Further, even in the embodiment using the casing 70, the clutch 111 used for towing the vehicle may be located in the large space that is ensured in the casing half 87 while the brake mechanism is disposed in the casing half 88. In this respect, the casing halves 87, 88 may be formed with respective boss portions for supporting the clutch-operating shaft 120, and the clutch-operating shaft 120 may be supported in the boss portion of the casing half 87.

Further, according to the embodiments of Figs. 12 and 13, a differential lock clutch 119 is attached to the differential gear unit 44. The differential lock clutch 119 is axially slidably and relatively rotatably provided on one output shaft (on the left output shaft 5L in the present embodiment) so as to be able to engage or disengage to and from this output shaft. Engagement pawls 119a are projected from the differential lock clutch 119, and are axially slidably, relatively unrotatably and constantly intruded into bull gear 69. According to Fig. 12, as a matter of convenience, the differential lock clutch 119 at a clutch-on (a differential lock) position 130 is illustrated on one side of the output shaft 5L, and the differential lock clutch 119 at a clutch-off (a non-differential lock) position 131 is illustrated on the other side of the output shaft 5L, An annular chase is formed on the differential lock clutch 119, and a fork 116 is engaged to the annular chase.

A lever shaft 112 is rotatably supported on the casing 170 parallel to the output shaft 5L, 5R. The lever shaft 112 is journalled at an end thereof in a recessed portion of one of the casing halves 187 and 188 (the casing half 187 in the present embodiment). The lever shaft 112 is passed at an intermediate portion thereof through a shaft hole of the other casing half (the casing half 188 in the present embodiment). A differential lock lever 115 is fixed on the outer end of the lever shaft 112 on the outside of the casing 170. A pin 118 is radially projected from the lever shaft 112 in the casing 170. A boss portion 116a of the fork 116 is axially slidably fitted onto the lever shaft 112. A spring 113 is wound around the lever shaft 112 between the boss portion 116a and the casing half 187. The boss portion 116a is biased against the differential lock lever 115. A V-shaped detent chase 116b is formed on the boss portion 116a.

When the differential lock lever 115 is disposed at the non-differential lock position, the position of the pin 118 corresponds with that of the detent chase 116b, so that the boss portion 116a is pressed toward the differential lock lever 115 due to a biasing force of the spring 113. Thus, the pin 118 is intruded into the detent chase 116b, and the differential lock clutch 119 connected to the boss portion 116a through the fork 116 is kept in the non-differential lock position 131. When the differential lock lever 115 is rotated to the differential lock position, the pin 118 is moved along the outer circumference of the lever shaft 112 along with turning of the lever shaft 112. The pin 118 also presses the sloped edge of the V-shaped detent chase 116b toward the opposite side of the lever 115, thereby moving the boss portion 116a to the side against the spring 113. Finally, the pin 118 escapes from the detent chase 116b and the boss portion 116 reaches a position where the spring 113 is maximally compressed. The differential lock clutch 119 reaches the differential lock position 130 and meshes with the side gear 71 of the output shaft 5L, thereby locking the output shaft 5L with the bull gear 69. Accordingly, the output shaft 5L rotates synchronously with the bull gear 69, thereby leading the other output shaft 5R to rotate synchronously with the bull gear 69 and the output shaft 5L. In this way, the rear wheel output shafts 5L and 5R are differentially locked.

Further, as shown in Fig. 13, a position where the lever shaft 112 is supported is offset on one side of the line L2 (above the line L2 when it is arranged as Figs. 1 and 2). Therefore, preferably, each of the casing halves 187 and 188 is formed on opposite sides of the line L2 with a pair of axisymmetric bosses or shaft holes adapted to support the lever shaft 112, in the same way as it is formed with the recessed portions 121 adapted to have the bearing 66 fitted therein for supporting an end portion of the counter shaft 67, so that, when the casing halves 187 and 188 are mutually inversed vertically and laterally and joined to each other, the boss of one casing half and the shaft hole of the other casing half are disposed coaxially to each other so as to enable supporting the lever shaft 112.

According to the above-mentioned embodiments as illustrated in Figs. 1 to 13, the hydraulic pump 23 is provided in the pump unit 123 that is independently separated from the hydraulic motor 21 a in the motor unit 21 externally attached to the rear transaxle 20 and the hydraulic motor 22a in the motor unit 22 externally attached to the front transaxle 10. Alternatively, the hydraulic pump 23 as well as the hydraulic motor may be incorporated in the motor unit attached onto one of the front and rear transaxles 10 and 20

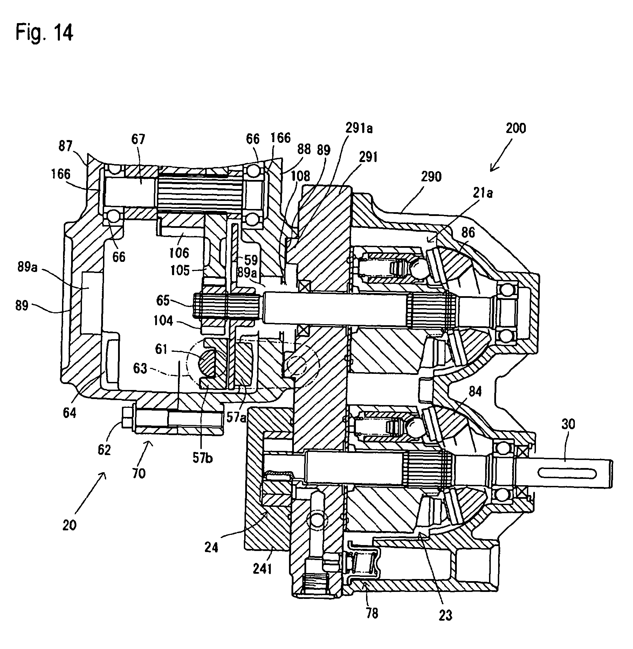

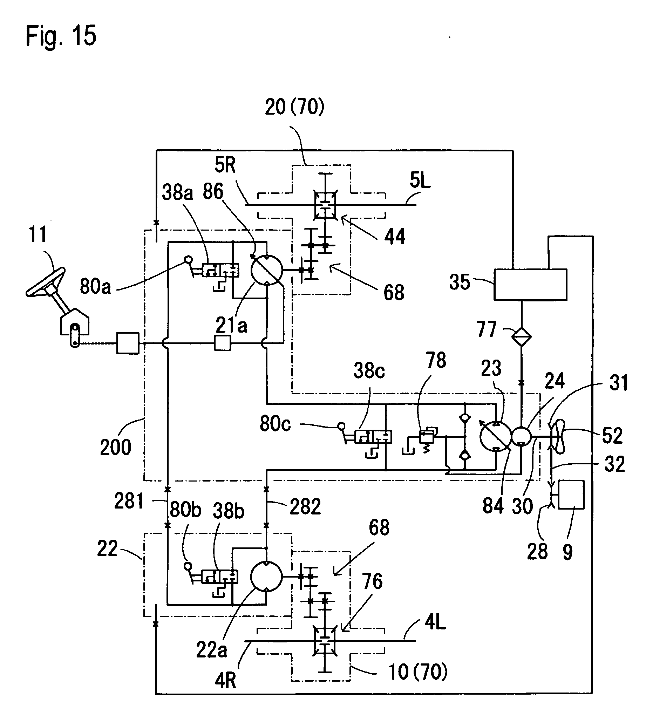

According to an embodiment as illustrated in Figs. 14 and 15, a motor unit (HST unit) 200, incorporating the hydraulic pump 23 and the hydraulic motor 21a, is attached to the rear transaxle 20. As shown in Fig.15, the only interposition of fluid passages 281, 282, such as pipes or the like, between the HST unit 200 and the motor unit 22 attached to the front transaxle 10 is enough to configure the HST closed circuit of the four wheel drive vehicle, fluidly connecting the hydraulic motors 21 a, 22a to the common hydraulic pump 23, In this way, the HST closed circuit is simpler than that with the hydraulic pump unit 123 requiring the above-described fluid passages 81, 82 and 83. Therefore, another additional hydraulic pump unit is unnecessary, thereby having advantages in minimization of the vehicle, reduction of the number of components and securement of a space for component placements.

A casing 290 and a fluid passage plate 291 are joined to each other so as to constitute a casing structure of the HST unit 200. A convexed portion 291 a is formed on the fluid passage plate 291. The HST unit 200 is externally attached to the rear transaxle 20 by fitting the convexed portion 291a into the above-mentioned recessed portion of the casing half 88 having the motor unit attachment surface 89. The hydraulic pump 23 and the hydraulic motors 21a are attached to the fluid passage plate 291 and are provided in the casing 290 so that the respective rotary axes thereof (i.e., the rotary axes of the pump shaft 30 and the motor shaft 65) are parallel to each other. The motor shaft 65 rotatably penetrates the fluid passage plate 291, and is inserted into the casing 70 of the rear transaxle 20 so as to be drivingly connected to the output shafts 4L, 4R in the same way as that of the preceding embodiment. When the motor shaft 65 is horizontally oriented parallel to the output shaft 4L, 4R, the pump shaft 30 is also horizontally oriented. The pump shaft 30 is connected to the vertical engine output shaft 47 through a twisted belt and pulleys when the vehicle 100 is equipped with the vertical engine 9 as illustrated in Figs. 1 and 2

The hydraulic pump 23 and motor 21a are provided with respective movable swash plates 84 and 86. The movable swash plates 84 and 86 illustrated in Fig. 14 are cradle-type plates, but the trunnion-typed plates as the preceding embodiment may be available. Alternatively, one of the swash plates of the hydraulic pump 23 and the hydraulic motor 21 a (especially, the hydraulic motor 21 a) may be the fixed swash plate.

A charge pump casing 241 embedding the charge pump 24 is fixed on the side surface of the fluid passage plate 291 offset from the casing 70 at the opposite side to the casing 290. The pump shaft 30 doubles as the drive shaft of the charge pump 24.

It is further understood by those skilled in the art that the foregoing description is a preferred embodiment of the disclosed apparatus and that various changes and modifications may be made in the invention without departing from the claims thereof.

## Claims

1. A transaxle (10,20) comprising:
a pair of output shafts (4R,4L,5R,5L) connected to a pair of wheels (6R,6L,7R,7L), respectively;
a differential unit (44,76) differentially connecting both of the output shafts (4R,4L,5R,5L) to each other; and
a casing (70,170) incorporating the differential unit (44,76) and both of the output shafts (4R,4L,5R,5L),
**characterized in that** the casing (70,170) is configured by joining a pair of substantially identical right and left casing halves (87,88) in a state where one casing half (87,88,187,188) is disposed to correspond to the other casing half (87,88) which is inverted laterally and vertically, that each of the joined casing halves (87,88,187,188) journals one of the output shafts (4R,4L,5R,5L), and that each of the right and left casing halves (87,88,187,188) is formed on an outside thereof with an attachment portion (89) adapted to have a motor (21a,22a) for driving the differential unit (44,76) attached thereon.

2. The transaxle (10,20) as set forth in claim 1, wherein the casing (70,170) of the transaxle (10,20) incorporates a gear (105,106) connecting a motor shaft (65) of the motor (21a,22a) to the differential unit (44,76), wherein a line (L2) connects a rotary axis of the motor shaft (65) to rotary axes of the output shafts (4R,4L,5R,5L), wherein the gear (105,106) is offset on one side from the line (L2), and wherein a pair of bosses (121) adapted for journaling the gear (105,106) are formed on each of the casing halves (187,188) so as to be offset on opposite sides from the line (L2).

3. The transaxle (10,20) as set forth in claim 1 or 2, wherein a plurality of bearings (74) are disposed in each of portions (87a,88a,187a,188a) of the casing halves (87,88,187,188), the portions (87a,88a,187a,188a) supporting the respective output shafts (4R,4L,5R,5L).

4. The transaxle (10,20) as set forth in any one of claims 1 to 3, wherein the differential unit (44,76) is provided with a differential lock mechanism (116,119).

5. The transaxle as set forth in any one of claims 1 to 4, wherein the transaxle (10,20) further comprises a mechanical clutch (111) interposed between the motor (21a,22a) and the differential unit (44,76).

6. The transaxle (10,20) as set forth in any one of claims 1 to 5, wherein the transaxle (10,20) further comprises a brake mechanism disposed in the casing (70,170) so as to brake the motor shaft (65) of the motor (21a,22a), wherein the brake mechanism includes a first friction member (57a) fixed on an internal wall of one (88,188) of the casing halves (87,88,187,188), a second friction member (57b) optionally operative to slide in an axial direction of the motor shaft (65), and a brake disc (59) disposed between the first and second friction member (57a,57b) and coaxially engaged onto the motor shaft (65) of the motor (21a,22a).

7. The transaxle (10,20) as set forth in claim 6, wherein the one casing half (88,188), on which the first friction member (57a) is fixed, supports a brake-operating shaft (61) for sliding the second friction member (57b).

8. The transaxle (10,20) as set forth in any one of claims 1 to 7, wherein the motor (21a,22a) is a hydraulic motor.

9. A vehicle (100) equipped with a pair of the transaxles (10,20) as set forth in any one of claims 1 to 8.

10. The vehicle (100) as set forth in claim 9, wherein each of the transaxles (10,20) is eccentrically disposed toward one of right and left sides of a vehicle body, and wherein one output shaft (4L,5L) of each of the transaxles (10,20) close to the one of right and left sides of the vehicle body has a wheel (6L,7L) directly attached thereto, and the other output shaft (4R, 5R) distant from the one of right and left sides of the vehicle body has a wheel (6R,7R) attached thereto through an extension drive shaft (146).

## Patentansprüche

1. Transaxle (10, 20), das umfasst:
ein Paar Abtriebswellen (4R, 4L, 5R, 5L), die jeweils mit einem Paar Räder (6R, 6L, 7R, 7L) verbunden sind;
eine Differentialeinheit (44, 76), welche die beiden Abtriebswellen (4R, 4L, 5R, 5L) differential miteinander verbindet; und
ein Gehäuse (70, 170), das die Differentialeinheit (44, 76) und die beiden Abtriebswellen (4R, 4L, 5R, 5L) enthält,
**dadurch gekennzeichnet, dass** das Gehäuse (70, 170) durch Verbinden eines Paars im Wesentlichen gleicher rechter und linker Gehäusehälften (87, 88) in einem Zustand konfiguriert ist, in dem eine Gehäusehälfte (87, 88, 187, 188) entsprechend der anderen Gehäusehälfte (87, 88), die seitlich und vertikal umgedreht ist, angeordnet ist, damit jede der verbundenen Gehäusehälften (87, 88, 187, 188) eine der Abtriebswellen (4R, 4L, 5R, 5L) drehbar lagert und damit jede der rechten und linken Gehäusehälften (87, 88, 187, 188) auf einer Außenseite davon mit einem Befestigungsabschnitt (89) gebildet ist, der dafür ausgelegt ist, dass er einen Motor (21a, 22a) zum Antreiben der daran befestigten Differentialeinheit (44, 76) aufweist.

2. Transaxle (10, 20) nach Anspruch 1, bei dem das Gehäuse (70, 170) des Transaxles (10, 20) ein Zahnrad (105, 106) enthält, das eine Motorwelle (65) des Motors (21a, 22a) mit einer Differentialeinheit (44, 76) verbindet, wobei eine Linie (L2) eine Drehachse der Motorwelle (65) mit Drehachsen der Abtriebswellen (4R, 4L, 5R, 5L) verbindet, wobei das Zahnrad (105, 106) auf einer Seite von der Linie (L2) versetzt ist, und wobei an jeder der Gehäusehälften (187, 188) ein Paar runder Vorsprünge (121), die dafür ausgelegt sind, das Zahnrad (105, 106) drehbar zu lagern, in der Weise gebildet sind, dass sie auf den gegenüberliegenden Seiten von der Linie (L2) versetzt sind.

3. Transaxle (10, 20) nach Anspruch 1 oder 2, bei dem in jedem der Abschnitte (87a, 88a, 187a, 188a) der Gehäusehälften (87, 88, 187, 188) eine Mehrzahl von Lagern (74) angeordnet sind, wobei die Abschnitte (87a, 88a, 187a, 188a) die jeweiligen Abtriebswellen (4R, 4L, 5R, 5L) stützen.

4. Transaxle (10, 20) nach einem der Ansprüche 1 bis 3, bei dem die Differentialeinheit (44, 76) mit einem Ausgleichssperrmechanismus (116, 119) versehen ist.

5. Transaxle nach einem der Ansprüche 1 bis 4, bei dem das Transaxle (10, 20) ferner eine mechanische Kupplung (111) umfasst, die zwischen dem Motor (21a, 22a) und der Differentialeinheit (44, 76) eingefügt ist.

6. Transaxle (10, 20) nach einem der Ansprüche 1 bis 5, bei dem das Transaxle (10, 20) ferner einen Bremsmechanismus umfasst, der in der Weise in dem Gehäuse (70, 170) angeordnet ist, dass er die Motorwelle (65) des Motors (21a, 22a) bremst, wobei der Bremsmechanismus ein erstes Reibelement (57a), das an einer Innenwand einer (88, 188) der Gehäusehälften (87, 88, 187, 188) befestigt ist, ein zweites Reibelement (57b), das optional zum Gleiten in einer axialen Richtung der Motorwelle (65) betreibbar ist, und eine Bremsscheibe (59), die zwischen dem ersten und dem zweiten Reibelement (57a, 57b) angeordnet ist und auf der Motorwelle (65) des Motors (21a, 22a) koaxial in Eingriff ist, enthält.

7. Transaxle (10, 20) nach Anspruch 6, bei dem die eine Gehäusehälfte (88, 188), an der das erste Reibelement (57a) befestigt ist, eine Bremsbetätigungswelle (61) zum Gleiten des zweiten Reibelements (57b) stützt.

8. Transaxle (10, 20) nach einem der Ansprüche 1 bis 7, bei dem der Motor (21a, 22a) ein Hydraulikmotor ist.

9. Fahrzeug (100), das mit einem Paar der Transaxles (10, 20) nach einem der Ansprüche 1 bis 8 ausgestattet ist.

10. Fahrzeug (100) nach Anspruch 9, bei dem jedes der Transaxles (10, 20) in Richtung der rechten oder der linken Seite eines Fahrzeugaufbaus exzentrisch angeordnet ist, und bei dem eine Abtriebswelle (4L, 5L) jedes der Transaxles (10, 20) in der Nähe der rechten oder der linken Seite des Fahrzeugaufbaus ein direkt daran befestigtes Rad (6L, 7L) aufweist, und bei dem die andere Abtriebswelle (4R, 5R) entfernt von der rechten oder von der linken Seite des Fahrzeugaufbaus ein über eine Verlängerungsantriebswelle (146) daran befestigtes Rad (6R, 7R) aufweist.

## Revendications

1. Boîte-pont (10, 20) comprenant :
une paire d'arbres de sortie (4R, 4L, 5R, 5L) connectés à une paire de roues (6R, 6L, 7R, 7L), respectivement ;
un module différentiel (44, 76) connectant de manière différentielle les deux arbres de sortie (4R, 4L, 5R, 5L) l'un à l'autre ; et
un carter (70, 170) incorporant le module différentiel (44, 76) et les deux arbres de sortie (4R, 4L, 5R, 5L), **caractérisée en ce que** le carter (70, 170) est configuré en reliant une paire de moitiés de carter droite et gauche (87, 88) essentiellement identiques dans un état où une moitié de carter (87, 88, 187, 188) est disposée pour correspondre à l'autre moitié de carter (87, 88) qui est inversée latéralement et verticalement, que chacune des moitiés de carter reliées (87, 88, 187, 188) sert de palier pour un des arbres de sortie (4R, 4L, 5R, 5L) et que chacune des moitiés de carter droite et gauche (87, 88, 187, 188) est formée sur un extérieur de celui-ci avec une portion de fixation (89) adaptée pour avoir un moteur (21a, 22a) pour entraîner le module différentiel (44, 76) qui y est fixé.

2. Boîte-pont (10, 20) selon la revendication 1, dans laquelle le carter (70, 170) de la boîte-pont (10, 20) incorpore un engrenage (105, 106) connectant un arbre de moteur (65) du moteur (21a, 22a) au module différentiel (44, 76), dans laquelle une ligne (L2) connecte un axe rotatif de l'arbre de moteur (65) à des axes rotatifs des arbres de sortie (4R, 4L, 5R, 5L), dans laquelle l'engrenage (105, 106) est décalé d'un côté de la ligne (L2) et dans laquelle une paire de bossages (121) adaptés à servir de palier à l'engrenage (105, 106) sont formés sur chacune des moitiés de carter (187, 188) de manière à être décalés sur des côtés opposés de la ligne (L2).

3. Boîte-pont (10, 20) selon la revendication 1 ou 2, dans laquelle une pluralité de paliers (74) sont disposés dans chacune de portions (87a, 88a, 187a, 188a) des moitiés de carter (87, 88, 187, 188), les portions (87a, 88a, 187a, 188a) supportant les arbres de sortie respectifs (4R, 4L, 5R, 5L).

4. Boîte-pont (10, 20) selon l'une des revendications 1 à 3, dans laquelle le module différentiel (44, 76) est pourvu d'un mécanisme de verrouillage du différentiel (116, 119).

5. Boîte-pont (10, 20) selon l'une des revendications 1 à 4, dans laquelle la boîte-pont (10, 20) comprend en outre un embrayage mécanique (111) interposé entre le moteur (21a, 22a) et le module différentiel (44, 76).

6. Boîte-pont (10, 20) selon l'une des revendications 1 à 5, dans laquelle la boîte-pont (10, 20) comprend en outre un mécanisme de frein disposé dans le carter (70, 170) de manière à freiner l'arbre de moteur (65) du moteur (21a, 22a), dans laquelle le mécanisme de frein inclut un premier élément de friction (57a) fixé sur une paroi interne d'une (88, 188) des moitiés de carter (87, 88, 187, 188), un second élément de friction (57b) fonctionnant en option en coulissant dans une direction axiale de l'arbre de moteur (65), et un disque de frein (59) disposé entre le premier et le second élément de friction (57a, 57b) et engagé de manière coaxiale sur l'arbre de moteur (65) du moteur (21a, 22a).

7. Boîte-pont (10, 20) selon la revendication 6, dans laquelle la moitié de carter (88, 188) sur laquelle le premier élément de friction (57a) est fixé supporte un arbre opérant le frein (61) pour faire coulisser le second élément de friction (57b).

8. Boîte-pont (10, 20) selon l'une quelconque des revendications 1 à 7, dans laquelle le moteur (21a, 22a) est un moteur hydraulique.

9. Véhicule (100) équipé d'une paire de boîtes-ponts (10, 20) selon l'une quelconque des revendications 1 à 8.

10. Véhicule (100) selon la revendication 9, dans lequel chacune des boîtes-ponts (10, 20) est disposée de manière excentrique vers l'un des côtés droit et gauche d'un corps de véhicule, et dans lequel un arbre de sortie (4L, 5L) de chacune des boîtes-ponts (10, 20) près d'un des côtés droit ou gauche du corps de véhicule possède une roue (6L, 7L) directement reliée à celui-ci, et l'autre arbre de sortie (4R, 5R) distant du côté droit ou gauche du corps de véhicule possède une roue (6R, 7R) reliée à celui-ci par un arbre de transmission à extension (146).
